# EUROPEAN PATENT APPLICATION

(11) **EP 1 322 087 A2**
(43) Date of publication of application: **25.06.2003**
(21) Application number: 02028072.3
(22) Date of filing: 17.12.2002
(51) Int. Cl.: H04L 29/06, G06F 1/00

(54) **Public key infrastructure token issuance and binding**

(30) Priority: 19.12.2001 US 27607
(71) Applicant: TRW INC., Redondo Beach, CA 90278 (US)
(72) Inventor: Aull, Kenneth W., Fairfax, Virginia 22030 (US); Kerr, Thomas C., Fairfax, Virginia 22032 (US); Freeman, William E., Arbutus, Maryland 21227 (US); Bellmore, Mark A., Mt. Airy, Maryland 21227 (US)
(74) Representative: Schmidt, Steffen J., Dipl.-Ing.

(57) **Abstract**

A token issuance and binding process includes providing a plurality of tokens, each token having a unique ID number stored therein. A unique public/private key pair is generated for each token and each token ID number and corresponding public key is stored in a directory/database. Each private key is stored in its respective token and a unique ID number of a user is bound to a corresponding one of the plurality of tokens by storing the correspondence there between in the directory/database.

## Description

### BACKGROUND

### Field of the Invention

The present invention relates to the issuance of tokens or smart cards in a PKI (Public Key Infrastructure). More particularly, the present invention relates to binding a certified token ID number to a certified user ID number within an organization's directory/database.

### Background Information

A PKI is a set of policies, procedures, and software that permit an organization to generate, issue, and manage public/private cryptographic keys in a manner that allows users to reliably determine the identity of the owner of each public/private key pair. The key components of a PKI include: (1) a mechanism for reliably conveying the identity of a key pair's owner to the end user; (2) software applications for generating and managing key pairs that support this mechanism; (3) a set of procedures for generating and revoking key pairs that ensures that the identity of the owner can be reliably determined; and (4) a set of policies defining who may obtain public/private key pairs and identifying how each pair may be used.

Tokens or smart cards are commercially available devices that store data in a non-volatile fashion such that the data may be readily read-out and/or changed. Most commercially available tokens include connectors to electrically connect them to token readers. The most popular commercially available tokens include USB (Universal Serial Bus) connectors which enable them to be connected to conventional PC's (Personal Computers). On the other hand, commercially available smart cards perform the same function as tokens while normally being electrically connected to smart card readers via some form of electromagnetic connection. For the purpose of discussion, tokens will be referred to noting that the descriptions below are equally applicable to smart cards.

Conventional PKI systems that utilize tokens, rely on an authorized member of the enterprise to act as an agent to issue tokens to users. These agents, referred to hereinafter as Tokenizing Officers, must use a specific "trusted" workstation to prepare a token for user. In addition, these Officers typically require a degree of specialized knowledge pertaining to PKI technology in order to issue tokens. The process of issuing tokens is very labor-intensive and the process is susceptible to potential tampering and to mistakes by the Tokenizing Officer. Accordingly, the integrity of the enterprise PKI system is endangered and there is a possibility that a user may later repudiate a certificate/private key issued to the user.

### SUMMARY OF THE INVENTION

In view of the problems noted above, it is an object of the present invention to provide a less labor-intensive process for issuing tokens while creating a correlation between a token, a user, and all of the certificates/public keys stored on a token.

It is therefore an object of the present invention to provide a token issuance and binding technique in which a token having a unique ID number stored therein is bound to a unique user number within an organization's directory/database. In addition, a unique public/private key pair is generated with the public key being stored in the organization's directory/database and the private key being stored on the token.

### BRIEF DESCRIPTION OF THE DRAWINGS

The foregoing and a better understanding of the present invention will become apparent from the following detailed description of example embodiments and the claims when read in connection with the accompanying drawings, all form a part of the disclosure of this invention. While the foregoing and following written and illustrated disclosure focuses on disclosing example embodiments of the invention, it should be clearly understood that the same is by way of illustration and example only and the invention is not limited thereto. The spirit and scope of the present invention are limited only by the terms of the appended claims.

The following represents a brief description of the drawings, wherein:

Figure 1 is a block diagram illustrating an exemplary architecture of a network in which the PKI process of the present invention may be practiced.

Figure 2 is a flowchart illustrating an example of the steps performed in a process in accordance with an example of the present invention.

### DESCRIPTION OF THE PREFERRED EMBODIMENTS

Before beginning a detailed description of the subject invention, mention of the following is in order. When appropriate, like reference numerals and characters may be used to designate identical, corresponding, or similar components in differing drawing figures. Furthermore, in the detailed description to follow, example sizes/models/values/ranges may be given, although the present invention is not limited thereto. Lastly, well-known components and connections have not been shown within the drawing figures for simplicity of illustration and discussion.

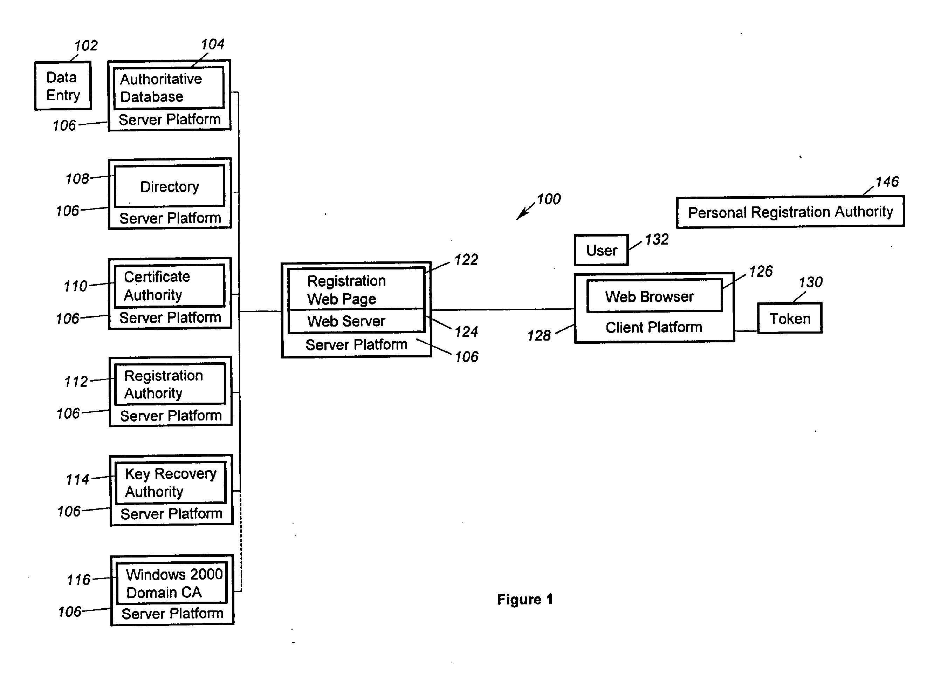

Fig. 1 illustrates an exemplary architecture of a network 100 in which the Public Key Infrastructure process of the present invention may be practiced. However, it should be understood that the present invention is not limited to the network 100 of FIG. 1.

The network 100 includes data entry 102, which performs a data entry function for authoritative database 104, which is resident on the server platform 106. A server platform 106 is referred to in this description, but it should be understood that the present invention is not limited to any particular server architecture. The server platform 106 may be, without limitation, a UNIX or Windows NT server. The authoritative database 104 contains information about members of the group or enterprise for which PKI services in accordance with the present invention are performed. The present invention is not limited by the structure of the group enterprise for which information is stored in the authoritative database 104. The authoritative database 104 information includes, without limitation, the name, address, telephone numbers, manager's name, employee identification, etc., of the members of the group or enterprise.

Directory 108 has the structure of the database but is optimized for fast look-up of information stored therein rather than fast data entry. The data in the directory 108 is not changed frequently but is required to be accessed rapidly and functions on-line as a fast phone book, containing reference information about the members of the group or enterprise stored in the authoritative database 104.

Certificate authority 110 is off-the-shelf software executed on server platform 106, providing storage of certificates, public keys and related information used by the present invention as described in more detail hereinafter.

Registration authority 112 is also off-the-shelf software executed on server platform 106 regarding registration performed by the present invention as described in more detail hereinafter.

Registration web page 122, which may be one or more pages, functions as the user interface to the network 100 of Fig. 1. Web server 124 is a software application which serves Web Pages, such as Web Page 122 or other HTML outputs, to a web browser client and which may be, without limitation, Apache or a Microsoft Internet Information Server. Web browser 126 is resident on client platform 128 which may be any user computer. Web browser 126 is a client software application for browsing web pages such as but not limited to HTML or XML protocols or other protocols. The Web browser 126 is programmed to operate with PKI certificates/public keys issued by the certificate authority 110. Examples of web browsers which have this capability are Netscape Navigator and the Microsoft Internet Explorer.

The token 130 is a smart card, USB (United Serial Bus) token, or other hardware token capable of generating, storing, and using PKI certificates/public keys.

A user 132 is a person using the network 100. A user 132 transitions through a number of states which include a new user, current user, and a former user who no longer is a member of the group or enterprise.

Personal registration authority 146 is a person who is in charge of registration of members in the network 100. Personal recovery approval 148 is a person in charge of approving recovery of certificates/public keys.

A limitation exists with the methods used to securely transport private keys for the user 132 between his token 130 and the server platform 106 of the certificate authority 110. In typical PKI architectures, a unique X.509 private key and key encipherment certificate is issued to each server platform 106. This is used to create a Secure Socket Layer (SSL) session between the server platform 106 and the client platform 128 so that all data transferred between these two platforms are encrypted and secure. However, a major security limitation exists because the last "6 inches" of the data path is not encrypted or secure; i.e. the path between the token 130 and the client platform 128 to which it is attached. That data is transferred typically in plain text.

The client platform 128 is therefore a major point of vulnerability. Malicious code, such as viruses or Trojan horses, running surreptitiously on the client platform 128 could corrupt, replace, or intercept data being transferred between the server platform 106 of the certificate authority 1109 and the destination token 130.

One salient feature of the invention lies in recognizing that tokens are manufactured with a unique identification number assigned to them and burned into a read-only location on the token. A unique private key and public key certificate are created for each token. In essence, we treat the token 130 like any other end-entity in a public key infrastructure. It has a unique identity. A private key and public key certificate is issued to or created for it. Now token 130 can be the point of origination or destination of any signed and/or encrypted data communications. Before this invention, data transferred from the server platform 106 and the token 130 was encrypted between the server platform 106 and the client platform 128 and relayed as plain text (unencrypted) between the client platform 129 and the token 130. With the present invention, the data is encrypted all the way from the server platform 106 to the token 130. The client platform 128 relays encrypted data, which it cannot decrypt or unwrap. The earlier security vulnerability does not exist.

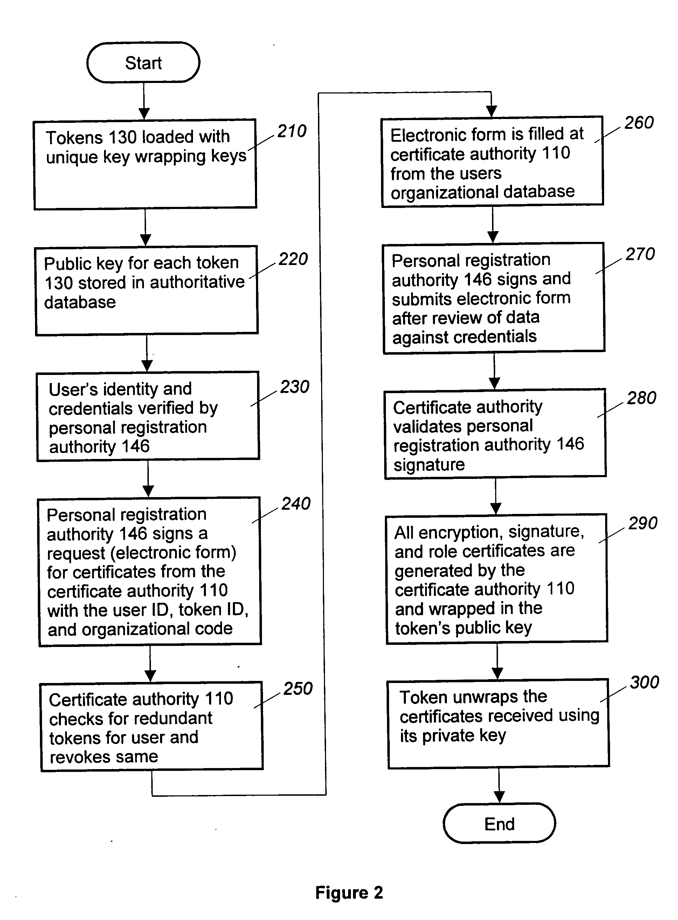

As illustrated in Fig. 2, initially the CMS (Certificate Management System), that is, the CA 110, receives a shipment of tokens. Each token is given a unique ID by the token manufacturer.

A unique public key/private key pair is then generated by the CMS for each token. The CMS stores the public key for each token in a directory along with the token ID and stores the unique private key on the token as illustrated in steps 210 and 220.

The CMS then ships the tokens to the location of the Tokenizing Officer. The Tokenizing Officer is an individual designated by the enterprise to issue tokens to users and corresponds to the Personal Registration Authority 146 of Fig. 1. Normally, there may be many Tokenizing Officers in a large enterprise.

A user wishing to receive a token then presents his or her credentials to the appropriate Tokenizing Officer who enters the user's ID number, organization, and token ID number into an E-form Request Web page after reviewing the user's credentials as illustrated in step 230.

In step 240, the E-form Request is sent by the Tokenizing Officer, after signing, to the CMS which checks for existing tokens for the user and revokes any certificates/public keys contained on the token as illustrated in step 250. Normally, only one token is issued to any one user in the enterprise. The CMS then identifies the user's organization and loads an organization-specific E-form. The CMS auto-fills the E-form with data from the user's organization's directory/database and returns the filled in E-form to the Tokenizing Officer as illustrated in step 260.

The Tokenizing Officer then compares the form data forwarded by the CMS with the user's credentials. If they match, the Tokenizing Officer electronically signs the form with his or her signature certificate/private key and forwards it back to the CMS. At this time, the user may be instructed to enter a PIN (Personal Identity Number) or pass phrase to be submitted back to the CMS. This PIN or pass phrase is used along with the token to verify the identity of the user and is not known to the Tokenizing Officer.

The CMS then receives the form and validates the Tokenizing Officer signature against the signature certificate recorded by the CA (Certificate Authority) as illustrated in step 280.

The CMS then generates the user's private key and signature certificate and wraps (that is-encrypts) them using the unique public key of the token and then forwards this data package to the workstation of the Tokenizing Officer who then stores the data package on the token as illustrated in step 290. The encrypted data package contains the user's private key and public certificate.

Finally, the Tokenizing Officer issues the token to the user. The Tokenizing Officer retains a copy of a personally signed form in which the user accepts the token and all of its responsibilities. This satisfies any requirement for a traceable "wet" signature to any digital signature as well as the requirements for a "face-to-face" meeting between the Tokenizing Officer and user as required by most high trust CMS systems.

The user then digitally signs the E-form for final submission to the CMS. The signature provides proof of acceptance. Upon receiving proof of acceptance, the certificate is published in the directory by the CMS. A compatible OCSP (On-line Certificate Status Protocol) responder will then reply to any validation request that the certificate is now valid. The OCSP responder will reply with a valid response to any certificate which has been published in the directory and which is not in the CRL (Certificate Revocation List). The OCSP responder will reply "unknown" if the CRL is not available or current. The OCSP will respond "invalid" if the CRL indicates that the user certificate has been revoked or if the certificate is not published.

As illustrated in step 300, only the user's token can unwrap the certificates/public keys on the token since they have been wrapped (encrypted) with the unique public key of the token and can therefore only be unwrapped (decrypted) with the unique private key stored on the token. Furthermore, only the user who has previously submitted his PIN or pass phrase can use the token since the data on the token cannot be accessed without the PIN or pass phrase.

The user, who now possesses this token, need not return to the Tokenizing Officer if the user wishes to obtain additional certificates/public keys. Rather, the user can use any workstation that can read the token to obtain additional certificates/public keys from the CMS since additional certificates/public keys can be forwarded to the user wrapped (encrypted) in the public key of the user's token. These additional certificates/public keys can only be decrypted by the user's token.

Another advantage of the process of the present invention is that if the token is lost or stolen, the user may make a single phone call to the CMS to invalidate the token and all of the certificates/public keys contained therein since the CMS has a record of all certificates assigned to that token.

Then, the user can return to the Tokenizing Officer and be issued a new token (with a new PIN or pass phrase). The new token can be initialized with all of the certificates/public keys previously contained within the lost or stolen token since, as noted above, the CMS has a complete record of all the certificates assigned to that token.

Note that the above example embodiment is purely in the context of a PKI arrangement. However, the present invention is not limited thereto. For example, consider the case of a smart card being issued by a bank. The Bank Officer, functioning in a fashion identical to that of the Tokenizing Officer, reviews the credentials of a customer who wishes to obtain a smart card having one or more debit or credit cards or ATM cards stored therein. It is presumed that there will be some sort of centralized database equivalent to the CA noted above.

The same procedure noted above is then repeated with the smart card instead of the token, thereby resulting in a smart card issued to the customer and having one or more debit or credit cards or ATM cards stored therein. The customer PIN is entered prior to the issuance of the smart card.

As with the case of the token user, the customer may add additional cards to the smart card without having returned to the Bank Officer. That is, if the customer has a MasterCard on his smart card, he may subsequently add a Visa card on his smart card at another terminal.

Should the smart card be lost or stolen, the customer could then immediately call the bank who would then invalidate all of the cards stored on the lost or stolen smart card.

The customer could then return to the Bank Officer and be issued a new smart card with a new PIN or pass phrase, the new smart card containing all of the cards stored on the lost or stolen smart card.

This concludes the description of the example embodiments. Although the present invention has been described with reference to a number of illustrative embodiments thereof, it should be understood that numerous other modifications and embodiments can be devised by those skilled of the art that will fall within the spirit and scope of the principles of this invention. More particularly, reasonable variations and modifications are possible in the component parts and/or arrangements of the subject combination arrangement within the scope of the foregoing disclosure, the drawings, and the appended claims without departing from the spirit of the invention. In addition to variations and modifications in the component parts and/or arrangements, alternative uses will also be apparent to those skilled of the art.

For example, the particular arrangement of elements illustrated in the drawing figures is by no means unique. Furthermore, the various server platforms may either be combined or separated to suit specific needs. Still furthermore, one enterprise officer may serve more than one function or vice versa.

## Claims

1. A token issuance and binding process comprising:
providing a plurality of tokens, each token having a unique ID number stored therein;
generating a unique public/private key pair for each token;
storing each token ID number and corresponding public key in a directory/database;
storing each private key in its respective token; and binding a unique ID number of a user to a corresponding one of the plurality of tokens by storing said correspondence there between in the directory/database.

2. The process of claim 1, the binding comprising a Tokenizing Officer reviewing credentials of a user and forwarding the user ID number and token ID number to a CMS (Certificate Management System) along with E-form request and signature of the Tokenizing Officer.

3. The process of claim 2, the binding further comprising the CMS checking for redundant user tokens and revoking any such user tokens.

4. The process of claim 3, the binding further comprising the CMS filling in the E-form from its directory/database and forwarding the filled in E-form to the Tokenizing Officer.

5. The process of claim 4, the binding further comprising the Tokenizing Officer reviewing data in filled in E-form and comparing against user credentials and returning same to CMS after signing.

6. The process of claim 5, the binding further comprising the CMS validating the Tokenizing Officer's signature and generating and wrapping at least a signature certificate/private and associated private key for the user in the unique public key of the token and returning same to the Tokenizing Officer.

7. The process of claim 6, the binding further comprising the Tokenizing Officer storing the signature certificate/private key for the user in the token.

8. The process of claim 7, the binding further comprising the user unwrapping the signature certificate/private key using the token private key stored in the token.

9. The process of claim 1, wherein providing a plurality of tokens comprises providing a plurality of USB (Universal Serial Bus) tokens.

10. The process of claim 1, wherein providing a plurality of tokens comprises providing a plurality of smart cards.

11. A PKI (Public Key Infrastructure) system comprising:
a plurality of tokens, each token having a unique ID number stored therein;
a CMS (Certificate Management System) facility including a first interface to read data from said plurality of tokens and to write data to said plurality of tokens and including a directory/database; and
a badging facility including a terminal operatively connected to communicate with said CMS and including a second interface to read data from said plurality of tokens and to write data to said plurality of tokens;
wherein said CMS generates a unique public/private key pair for each token and stores each token ID number and corresponding token public key in said directory/database and stores each token private key in its respective token; and
wherein a Tokenizing Officer utilizes said terminal in said badging facility to forward a unique ID number of a user to which a particular token is to be issued along with the unique ID number of said particular token to said CMS and wherein said CMS binds the unique ID number of said user to said particular token ID number by storing the correspondence there between in said directory/database.

12. The system of claim 11, wherein said Tokenizing Officer reviews credentials of said user and forwards the user ID number and token ID number to said CMS along with an E-form request and signature of said Tokenizing Officer.

13. The system of claim 12, wherein said CMS checks for redundant user tokens and revokes any such user tokens.

14. The system of claim 13, wherein said CMS fills in the E-form from said directory/database and forwards the filled in E-form to said Tokenizing Officer.

15. The system of claim 14, wherein said Tokenizing Officer reviews data in filled in E-form and compares against user credentials and returns same to said CMS after signing.

16. The system of claim 15, wherein said CMS validates said Tokenizing Officer's signature and generates and wraps at least a signature certificate and associated private key for said user in said unique token public key of said particular token and returns same to said Tokenizing Officer.

17. The system of claim 16, wherein said Tokenizing Officer stores the signature certificate/private key for said user in said particular token.

18. The system of claim 17, wherein said user unwraps said signature certificate/private key using said token private key stored in said particular token.

19. The system of claim 11, wherein said plurality of tokens comprises a plurality of USB (Universal Serial Bus) tokens.

20. The system of claim 11, wherein said plurality of tokens comprises a plurality of smart cards.
